(19) Europäisches Patentamt
European Patent Office
Office européen des brevets

(11) Veröffentlichungsnummer: **0 331 031**
**A2**

(12) # EUROPÄISCHE PATENTANMELDUNG

(21) Anmeldenummer: **89103260.9**

(22) Anmeldetag: **24.02.89**

(51) Int. Cl.4: **C08G 63/68 , C08G 63/76 , D06M 13/46**

(30) Priorität: **04.03.88 DE 3807069**

(43) Veröffentlichungstag der Anmeldung: **06.09.89 Patentblatt 89/36**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Uphues, Günter**
**Robert-Koch-Strasse 45**
**D-4019 Monheim(DE)**
Erfinder: **Ploog, Uwe, Dr.**
**Haydnweg 6**
**D-5657 Haan(DE)**
Erfinder: **Becker, Wolfgang**
**Brucknerallee 224**
**D-4050 Mönchengladbach 2(DE)**
Erfinder: **Goebel, Irmhild**
**Auf dem Hennekamp 86**
**D-4000 Düsseldorf 1(DE)**

(54) **Quatäre Ammoniumphosphate auf Basis aminofunktioneller Polyester.**

(57) Es werden quatäre Ammoniumphosphate auf Basis aminofunktioneller Polyester, ein Verfahren zu deren Herstellung sowie die Verwendung derselben als Antistatika für Textilfasermaterialien beschrieben.

EP 0 331 031 A2

Xerox Copy Centre

## "Quatäre Ammoniumphosphate auf Basis aminofunktioneller Polyester"

Die Erfindung betrifft quatäre Ammoniumphosphate auf Basis aminofunktioneller Polyester, ein Verfahren zu deren Herstellung sowie die Verwendung derselben als Antistatika für Textilfasermaterialien.

Zur Vermeidung elektrostatischer Aufladungen bei der Verarbeitung sowie beim Gebrauch von Textilfasermaterialien ist eine Vielzahl antistatischer Hilfsmittel bekannt. So werden beispielsweise in "Melliand Textilberichte" 1979, 263 quatäre Ammoniummethosulfate, -chloride und -alkylphosphate als Antistatika beschrieben. Die Thermostatilität solcher Ammoniummethosulfate und -chloride ist jedoch häufig nicht zufriedenstellend. Insbesondere Chloride fördern die Korrosion metallischer Apparateteile. Als weiterer Nachteil ist die Verwendung von Dimethylsulfat, einer gesundheitsgefährdenden Substanz, zur Herstellung der Ammoniummethosulfate zu nennen. Ammoniumalkylphosphate besitzen bei niedigem Feuchtegehalt in der Luft keine oder nur noch eine sehr schwache antistatische Wirksamkeit.

Aus US 3 082 227 sind antistatisch wirkende quaternäre Ammoniumsalze der allgemeinen Formel

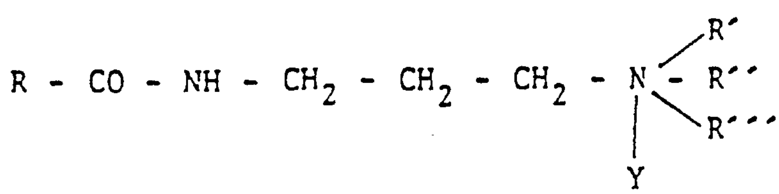

bekannt, in der R aliphatische oder alicyclische Reste mit wenigstens 7 C-Atomen, R′ und R″ Alkylreste mit 1 bis 3 C-Atomen oder Monohydroxyalkylreste mit 2 bis 3 C-Atomen, R‴ Monohydroxyalkylreste mit 2 bis 3 C-Atomen und Y das Anion einer anorganischen Säure bedeutet. Die Salze insbesondere starker anorganischer Säuren fördern die Korrosion in erheblichem Maße.

Die Aufgabe der Erfindung bestand daher in der Entwicklung antistatischer Mittel mit hoher antistatischer Wirksamkeit, unabhängig vom Feuchtegehalt in der Luft und hoher Thermostabilität. Ferner sollen diese antistatischen Mittel in einfacher Weise aus leichtzugänglichen Ausgangsmaterialien in Abwesenheit gesundheitsgefährdender Substanzen herstellbar und gut handhabbar sein sowie keine korrodierende Wirkung gegenüber Metalloberflächen besitzen.

Überraschenderweise wurde gefunden, daß die an die zu entwickelnden Antistatika gestellten hohen Anforderungen von quatären Ammoniumphosphaten auf Basis aminofunktioneller Polyester erfüllt werden.

Gegenstand der Erfindung sind dementsprechend quatäre Ammoniumphosphate, hergestellt durch

a) Umsetzung von Dicarbonsäuren der allgemeinen Formel I

HOOC-R-COOH

in der R einen aliphatischen, alilcyclischen oder aromatischen, gegebenenfalls substituierten Rest mit 1 bis 10 C-Atomen bedeutet, mit alkoxylierten tertiären Aminen der allgemeinen Formel II

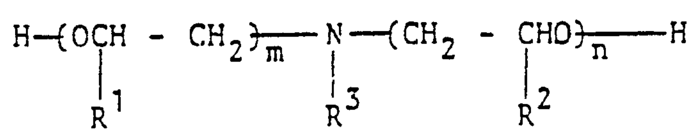

in der $R^3$ einen gesättigten oder ungesättigten, gerad- oder verzweigtkettigen, substituierten oder unsubstituierten Alkylrest mit 1 bis 20 C-Atomen bedeutet, $R^1$ und $R^2$ gleich oder verschieden sind und H oder $CH_3$ bedeuten, m und n Zahlen zwischen 1 und 20 sind mit der Maßgabe, das die Summe von m und n 2 bis 30 ist und der Polymerisationsgrad der Polyester 2 bis 50 beträgt

b) Mischen der erhaltenen aminofunktionellen Polyester in Gegenwart von Wasser bei 50 bis 80 °C mit Mono- und/oder Dialkylphosphorsäureestern der allgemeinen Formel IIIa und IIIb

IIIa

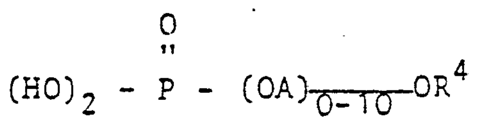

IIIb

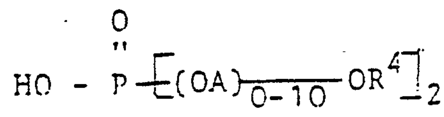

in welchen der Rest $R^4$ eine gesättigte oder ungesättigte, gerad- oder verzweigtkettige, substituierte oder unsubstituierte Alkylgruppe mit 6 bis 22 C-Atomen und A Alkylengruppen mit 2 - 4 C-Atomen darstellt

c) Umsetzung mit Alkylenoxiden mit 2 bis 4 C-Atomen bei Drucken zwischen 1 und 5 bar und Temperaturen zwischen 80 und 100 °C mit der Maßgabe, daß die Polyalkyletherkette der quaternierten Aminfunktionen aus 1 bis 10 Alkylenoxideinheiten besteht.

Bevorzugt leiten sich die erfindungsgemäßen Ammoniumphosphate von solchen Aminofunktionellen Polyestern ab, die durch Umsetzung von Dicarbonsäuren der allgemeinen Formel I mit alkoxylierten tertiären Aminen der allgemeinen Formel II, in der $R^3$ eine gesättigte oder ungesättigte, gerad- oder verzweigtkettige, substituierte oder unsubstituierte Alkylgruppe mit 6 bis 20 C-Atomen bedeutet, erhalten werden und die anschließend mit Mono- und/oder Dialkylphosphorsäureestern der allgemeinen Formeln IIIa und IIIb, in welchen $R^4$ eine gerad- oder verzweigtkettige, substituierte oder unsubstituierte, gesättigte Alkylgruppe mit 8 bis 18 C-Atomen oder eine gerad- oder verzweigtkettige, substituierte oder unsubstituierte, ungesättigte Alkylgruppe mit 18 bis 22 C-Atomen und A Ethylen- und/oder Isopropylengruppen bedeutet, gemischt werden. Besonders bevorzugt werden quatäre Ammoniumphosphate mit 1 bis 5 Ethylenoxid- und/oder Propylenoxid-Einheiten in der Polyalkyletherkette.

Ein weiterer Erfindungsgegenstand ist ein Verfahren zur Herstellung quatärer Ammoniumphosphate, welches dadurch gekennzeichnet ist, daß aminofunktionelle Polyester mit einem Polymerisationsgrad von 2 bis 50, hergestellt in an sich bekannter Weise durch Unsetzung von Dicarbonsäuren der allgemeinen Formel I

HOOC-R-COOH

in der R einen aliphatischen, alicyclischen oder aromatischen, gegebenenfalls substituierten Rest mit 1 bis 10 C-Atomen bedeutet, mit alkoxylierten, tertiären Aminen der allgemeinen Formel II

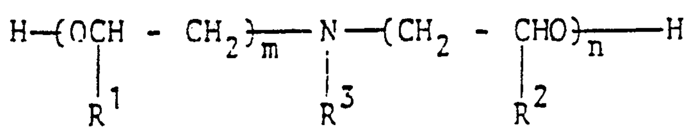

in der $R^3$ einen gesättigten oder ungesättigten, gerad- oder verzweigtkettigen, substituierten oder unsubstituierten Alkylrest mit 1 bis 20 C-Atomen bedeutet, $R^1$ und $R^2$ gleich oder verschieden sind und H oder $CH_3$ bedeuten, m und n Zahlen zwischen 1 und 20 sind, mit der Maßgabe, daß die Summe m und n 2 bis 30 beträgt,

mit Mono- und/oder Dialkylphosphorsäureestern der allgemeinen Formeln IIIa und IIIb

IIIa

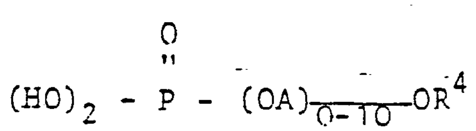

IIIb

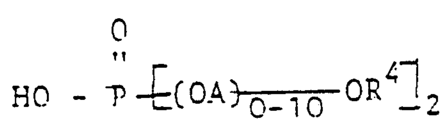

in welcher $R^4$ eine gesättigte oder ungesättigte, gerad- oder verzweigtkettige, substituierte oder unsubstituierte Alkylgruppe mit 6 bis 22 C-Atomen und A Alkylengruppen mit 2 - 4 C-Atomen bedeutet, in Gegenwart von Wasser bei 50 bis 80 °C gemischt werden und anschließend mit Alkylenoxiden mit 2 bis 4 C-Atomen bei Drucken zwischen 1 und 5 bar und bei Temperaturen zwischen 80 und 100 °C zur Reaktion gebracht werden, mit der Maßgabe, daß die Polyalkyletherkette der quaternierten Aminfunktionen aus 1 bis 10 Alkylenoxid-Einheiten besteht.

Die zur Herstellung der erfindungsgemäßen Ammoniumphosphate benötigten aminofunktionellen Polyester werden gemäß DE-OS 30 32 216 durch Kondensation alkoxylierter, tertiärer Amine der allgemeinen

Formel II mit Dicarbonsäuren der allgemeinen Formel I bei Temperaturen zwischen 180 und 260 °C, gegebenenfalls in Gegenwart von mit Wasser nicht mischbaren organischen Lösungsmitteln, beispielsweise Xylol oder Toluol, zur azeotropen Entfernung von Reaktionsnebenprodukten unter Ausschluß von Luftsauerstoff erhalten. Die Umsetzung ist beendet, wenn die Säurezahl des wasser- und lösungsmittelfreien Reaktionsgemisches den Wert 10 unterschritten hat. Die aminofunktionellen Polyester besitzen Polymerisationsgrade zwischen 2 und 50, wenn pro Mol alkoxyliertem, tertiärem Amin der allgemeinen Formel II 0,8 bis 1,1 Mol Dicarbonsäure der allgemeinen Formel I eingesetzt werden.

Als Dicarbonsäuren der allgemeinen Formel I kommen aliphatische, alicyclische und/oder aromatische, gegebenenfalls substituierte Dicarbonsäuren in Frage, beispielsweise Malonsäure, Maleinsäure, Fumarsäure, Bernsteinsäure, Hydroxymalonsäure, Äpfelsäure, Chlorethandicarbonsäure, Oxalsäure und/oder Terephthalsäure. Im Fall der Oxalsäure verschwindet R in der allgemeinen Formel I. Besonders geeignete aliphatische Dicarbonsäuren sind Säuren mit 6 bis 10 C-Atomen, wie Adipinsäure, Pimelinsäure, Korksäure, Azelainsäure und/oder Sebacinsäure. Statt der freien Säuren kann man mit gleichem Ergebnis auch Derivate dieser Säuren (Anhydride, Halogenide, Dimethylester) in äquimolaren Mengen einsetzen. Vorzugsweise werden jedoch die freien Dicarbonsäuren verwendet.

Die zur Herstellung von aminofunktionellen Polyestern verwendeten alkoxylierten, tertiären Amine der allgemeinen Formel II leiten sich von primären Alkyl- und/oder Alkenylaminen ab, beispielsweise von Methylamin, Ethylamin, Butylamin, Octylamin, Decylamin, Dodecylamin, Cetylamin, Oleylamin, Linoleylamin, Kokosamin und/oder Talgamin. Alkylamine, die aus Kokosöl oder Talg hergestellt werden, werden bevorzugt. In diesen Fällen bedeutet $R^3$ in der allgemeinen Formel II einen Rest, der sich von Kokosöl oder Talg ableitet. Die Alkyl- und/oder Alkenylamine werden in an sich bekannter Weise bei Temperaturen zwischen 130 und 180 °C mit Ethylenoxid und/oder Propylenoxid alkoxyliert. Der Alkoxylierungsgrad kann in weiten Grenzen schwanken und liegt zwischen 2 und 30 (Summe von m und n).

Die zur Herstellung der erfindungsgemäßen quatären Ammoniumphosphate auf Basis aminofunktioneller Polyester benötigten Mono- und/oder Dialkylphosphorsäureester der allgemeinen Formel IIIa und IIIb sind ebenfalls nach literaturbekannten Verfahren zugänglich. Zur Herstellung der Phosphorsäureester werden gesättigte oder ungesättigte, gerad-oder verzweigtkettige, substituierte oder unsubstituierte gewünschtenfalls alkoxylierte Alkohole, mit 6 bis 22 C-Atomen und/oder deren Alkoxylate als Edukte eingesetzt. Vorzugsweise werden gerad- oder verzweigtkettige, substituierte oder unsubstituierte, gesättigte, gewünschtenfalls alkoxylierte Alkohole mit 8 bis 18 C-Atomen oder gerad- oder verzweigtkettige, substituierte oder unsubstituierte, ungesättigte, gewünschtenfalls alkoxylierte Alkohole mit 18 bis 22 C-Atomen eingesetzt beispielsweise 2-Ethylhexanol, n-Octanol, Isononyl-, Decyl-, Dodecyl-, Isotridecyl-, Tetradecyl-, Hexadecyl-, Octadecyl-, Octadecenyl-, Eicosenyl-, Docosenylalkohol sowie die entsprechenden mit 1 - 10 Mol Ethylen- und/oder Propylenoxid umgesetzten Alkohole. Die Phosphatierung der Alkohole erfolgt in an sich bekannter Weise, in dem beispielsweise 3 Mol Alkohol mit 1 Mol $P_2O_5$ bei 50 - 80 °C umgesetzt werden. Zur Hydrolyse von Polyphosphorsäureverbindungen wird anschließend mehrere Stunden bei 90 - 100 °C mit Wasser behandelt.

Zur Herstellung der erfindungsgemäßen quatären Ammoniumphosphate werden Mischungen aus aminofunktionellen Polyestern, Mono- und/oder Dialkylphosphorsäureestern, Wasser und gegebenenfalls polaren organischen Lösungsmitteln bereitet, mit der Maßgabe, daß pro Aminäquivalent aminofunktionelle Polyester 1 bis 1,1 Säureäquivalente an Phosphorsäurepartialester eingesetzt werden. Als polare organische Lösungsmittel kommen insbesondere aliphatische Alohole mit 1 bis 6 C-Atomen, beispielsweise Methanol, Ethanol, n-Propanol, i-Propanol, n-Butanol, n-Hexanol, Ethylenglycol, Propylenglycol und/oder Hexylenglycol zum Einsatz, wobei das Volumenverhältnis Wasser : organisches polares Lösungsmittel zwischen 10 : 1 und 1 : 4 liegt. Die Menge an Wasser, gegebenenfalls in Kombination mit polaren organischen Lösungsmitteln wird vorzugsweise so bemessen, daß der Gehalt quatärer Imidazoliniumphosphate in den Produkten zwischen 30 und 80 Gewichtsprozent liegt. In diese Gemische, enthaltend aminofunktionelle Polyester, Mono- und/oder Dialkylphosphorsäureester, Wasser und gegebenenfalls polare organische Lösungsmittel, werden anschließend in an sich bekannter Weise Alkylenoxide mit 2 bis 4 C-Atomen bei Drucken zwischen 1 und 5 bar und Temperaturen zwischen 80 und 100 °C eingeleitet, mit der Maßgabe, daß die Polyalkyletherkette der quaternierten Aminfunktionen 1 bis 10 Alkylenoxid-Einheiten aufweist. Die Umsetzungen werden vorzugsweise mit Ethylenoxid und/oder Propylenoxid durchgeführt, mit der Maßgabe, daß die Polyalkyletherkette aus 1 bis 5 Alkylenoxideinheiten besteht.

Die nach dem erfindungsgemäßen Verfahren in hohen Ausbeuten zugänglichen quatären Ammoniumphosphate auf Basis aminofunktioneller Polyester sind gelbe bis hellbraune, niedrigviskose Flüssigkeiten, die ohne Gelbildung mit Wasser mischbar sind. Sie besitzen gegenüber Textilfasermaterialien eine hohe antistatische Wirkung, die vom Feuchtegehalt in der Luft weitgehend unabhängig ist, besitzen keine korrodierende Wirkung gegenüber Metalloberflächen und verfügen über hohe Thermostabilitäten.

Die Verwendung von quatären Ammoniumphosphaten auf Basis aminofunktioneller Polyester als Antistatika für Textilfasermaterialien ist daher ebenfalls Erfindungsgegenstand.

Unter dem Begriff "Textilfasermaterialien" werden natürliche Fasern, beispielsweise Baumwolle, Wolle und/oder Zellwolle, synthetische Fasern, beispielsweise Polyacrylnitril, Polyester, Polyamid, Triacetat, Polyethylen und/oder Polypropylen, sowie Mischungen natürlicher und synthetischer Fasern zusammengefaßt. Die Textilfasermaterialien können als Flocke, Kammzug, Strickgarn, Webgarn, Nähgarn, Wirkware, Gewebe oder Nonewovens vorliegen. Das Material kann rohweiß, gebleicht oder gefärbt sein. Bei den Garnen kann es sich sowohl um Filament- als auch um Fasergarne handeln.

Die erfindungsgemäßen quatären Ammoniumphosphate werden mit Hilfe üblicher Apparturen auf die Textilfasermaterialien aufgebracht. Die Applikation nach einem Ausziehverfahren, beispielsweise auf Färbeapparaturen, erfolgt aus wäßriger Flotte mit einem Flottenverhältnis zwischen 1 : 5 und 1 : 40 und einem pH-Wert in der Flotte zwischen 3,0 und 8,0 bei Temperaturen zwischen 25 und 80 °C und einer auf das Warengewicht bezogenen Konzentration von 1 bis 5 Gew.-% an antistatischen Wirkstoffen. Die quatären Ammoniumphosphate können auch nach einem Zwangsapplikationsverfahren, beispielsweise mittels Foulardieren, Galettenapplikation, über Dosierpumpensysteme, wie sie bei der Herstellung synthetischer Filamentgarne üblich sind, oder durch Aufsprühen auf Textilfasermaterialien aufgebracht werden. Im Foulardverfahren wird in Abhängigkeit vom gewünschten Abquetscheffekt und von der gewünschten Auflage mit Konzentrationen zwischen 1 und 50 g/l Flotte - bezogen auf 100 % Wirkstoff - gearbeitet.

## Beispiele

Herstellung der quartären Ammoniumphosphate

A

524,0 g (0,74 Aminäquivalente) eines Polyesters aus Talgamin-5EO und Adipinsäure (molares Verhältnis = 1 : 1) wurden zusammen mit 200,0 g Wasser und 113,7 g (0,74 Säureäquivalente) eines Gemisches aus Mono- und Di-2-ethylhexylphosphorsäureester (Gewichtsverhältnis = 4 : 3) in einem Autoklaven bei 50 °C vorgelegt und innerhalb von 4 Stunden mit 162,3 g (3,69 Mol) Ethylenoxid 85 °C / 3,5 bar zur Reaktions gebracht.

Es wurden 998 g einer gelben, mittelviskosen, klaren, leicht mit Wasser verdünnbaren Flüssigkeit erhalten.

B

Unter den bei A genannten Bedingungen wurden 419,0 g (1,02 Aminäquivalente) eines Polyesters aus Kokosamin-2EO und Adipinsäure (molares Verhältnis = 1 : 1), 200,0 g Wasser und 157,2 g (1,02 Säureäquivalente) mit 223,8 g (5,08 Mol) Ethylenoxid umgesetzt.

Es wurden 994 g einer gelben, mittelviskosen, klaren, mit Wasser leicht verdünnbaren Flüssigkeit erhalten.

## Prüfergebnisse

1. Applikation im Ausziehverfahren

Gewebeproben aus Polyester- und Polyacrylnitrilfasern wurden bei einem Flottenverhältnis von 1 : 20 20 Minuten in eine 40 - 45 °C warme wäßrige Lösung getaucht, die bezogen auf das Warengewicht jeweils 3 Gew.-% eine der quartären Ammoniumphosphate A oder B enthielt. Danach wurde geschleudert und 3 Minuten bei 120 °C getrocknet.

Die bei 22 °C und 62 - 65 % relative Luftfeuchte (Klima I) sowie bei 23 °C und 25 % relative Luftfeuchte (Klima II) klimatisierten Gewebeproben wurden wie folgt geprüft:

a) auf einem Statikvoltmeter (Messung der Reibungsaufladung); es wurde die Feldzerfallhalbwertszeit (FHZ) ermittelt. FHZ ist die Zeit in Sekunden, in der die sofort nach dem Reiben an Stahl gemessene Ladung auf die Hälfte abgesunken ist.

b) mit einer Siemenselektrode auf einem Teraohmmeter (elektrischer Oberflächenwiderstand in Ohm).

| Bewertungsschema | | |
|---|---|---|
| | antistatischer Effekt | |
| | FHZ (sec.) | Oberflächenwiderstand (Ohm) |
| + + + sehr gut | 0 - 0,3 | $1 \times 10^{6}$ - $1 \times 10^{8}$ |
| + + gut | 0,3 - 1,0 | $1 \times 10^{8}$ - $1 \times 10^{9}$ |
| + befriedigend | 1,0 - 2,0 | $1 \times 10^{9}$ - $1 \times 10^{10}$ |
| 0 ausreichend | 2,0 - 3,0 | $1 \times 10^{10}$ - $5 \times 10^{10}$ |
| - ungenügend | > 3,0 | > $5 \times 10^{10}$ |

Tabelle

| Ergebnisse | | | | | |
|---|---|---|---|---|---|
| Gewebe | Substanz | Klima I | | Klima II | |
| | | FHZ | Ohm | FHZ | Ohm |
| Polyester | unbehandelt | - | - | - | - |
| Polyester | A | + + + | + + | + + | + |
| Polyester | B | + + + | + + | + + | + |
| Polyacrylnitril | unbehandelt | - | - | - | - |
| Polyacrylnitril | A | + + + | + + | + + | o |
| Polyacrylnitril | B | + + | + + | + | o |

2. Applikation nach dem Foulard-Verfahren

Gewebeproben aus Polyester- und Polyacrylnitrilfasern wurden foulardmäßig wie folgt behandelt:
Flottentemperatur: 25 °C
Flottenaufnahme: 100 Gew.-% bei Polyester
120 Gew.-% bei Polyacrylnitril
Produktauflagen: 0,25 Gew.-%; 0,5 Gew.-%;
1,0 Gew.-%; 2,0 Gew.-%

Danach wurde 3 Minuten bei 120 °C getrocknet. Zusätzlich wurden im Falle des Polyesters die Proben geteilt und bei 180 °C jeweils 30 Sekunden fixiert. Prüfung und Bewertung erfolgten wie unter 1. beschrieben.

Tabelle

| Ergebnisse | | | | | | | | | |
|---|---|---|---|---|---|---|---|---|---|
| Klima I | | | | | | | | | |
| Gewebe | Substanz | Produktauflage | | | | | | | |
| | | 0,25% | | 0,5% | | 1,0% | | 2,0% | |
| | | FHZ | Ohm | FHZ | Ohm | FHZ | Ohm | FHZ | Ohm |
| Polyester | unbehandelt | - | - | - | - | - | - | - | - |
| Polyester | A | + + + | + + + | + + + | + + + | + + + | + + + | + + + | + + + |
| Polyester | A,fixiert | + + + | + + + | + + + | + + + | + + + | + + + | + + + | + + + |
| Polyester | B | + + + | + + + | + + + | + + + | + + + | + + + | + + + | + + + |
| Polyester | B,fixiert | + + + | + + + | + + + | + + + | + + + | + + + | + + + | + + + |
| Polyacrylnitril | unbehandelt | - | - | - | - | - | - | - | - |
| Polyacrylnitril | A | + + + | + + | + + + | + + | + + + | + + | + + + | + + + |
| Polyacrylnitril | B | + + + | + + | + + + | + + | + + + | + + + | + + + | + + + |

| Klima II | | | | | | | | | |
|---|---|---|---|---|---|---|---|---|---|
| Gewebe | Substanz | Produktauflage | | | | | | | |
| | | 0,25% | | 0,5% | | 1,0% | | 2,0% | |
| | | FHZ | Ohm | FHZ | Ohm | FHZ | Ohm | FHZ | Ohm |
| Polyester | unbehandelt | - | - | - | - | - | - | - | - |
| Polyester | A | + + | + | + + | + | + + + | + | + + + | + |
| Polyester | A,fixiert | + + | o | + + | o | + + | + | + + + | + |
| Polyester | B | + + | o | + + | + | + + + | + | + + + | + |
| Polyester | B,fixiert | + | o | + + | o | + + | + | + + + | + |
| Polyacrylnitril | unbehandelt | - | - | - | - | - | - | - | - |
| Polyacrylnitril | A | + + | o | + + | o | + + | + | + + + | + |
| Polyacrylnitril | B | + | o | + + | o | + + | + | + + + | + |

## Ansprüche

1. Quatäre Ammoniumphosphate, hergestellt durch

a) Umsetzung von Dicarbonsäuren der allgemeinen Formel I

HOOC-R-COOH

in der R einen aliphatischen, alicyclischen oder aromatischen, substituierten oder unsubstituierten Rest mit 1 bis 10 C-Atomen bedeutet, mit alkoxylierten, tertiären Aminen der allgemeinen Formel II

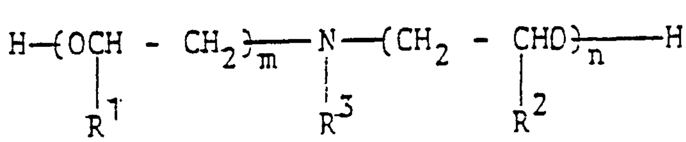

in der $R^3$ eine gesättigte oder ungesättigte, gerad-oder verzweigkettige, substituierte oder unsubstituierte Alkylgruppe mit 1 bis 20 C-Atomen bedeutet, $R^1$ und $R^2$ gleich oder verschieden sind und H oder $CH_3$ bedeuten, m und n Zahlen zwischen 1 und 20 sind, mit der Maßgabe, daß die Summe m + n zwischen 2 und 30 liegt und der Polymerisationsgrad der Polyester 2 bis 50 beträgt

b) Mischen der erhaltenen aminofunktionellen Polyester in Gegenwart von Wasser bei 50 bis 80 °C mit Mono-und/oder Dialkylphosphorsäureestern der allgemeinen Formeln IIIa und IIIb

IIIa

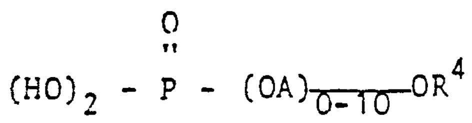

IIIb

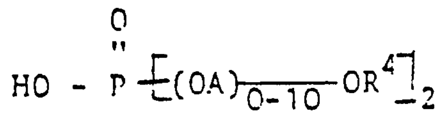

in welchen $R^4$ eine gesättigte oder ungesättigte, gerad-oder verzweigtkettige, substituierte oder unsubstituierte Alkylgruppe mit 6 bis 22 C-Atomen und A Alkylengruppen mit 2 - 4 C-Atomen darstellt

c) Umsetzung mit Alkylenoxiden mit 2 bis 4 C-Atomen bei Drucken zwischen 1 und 5 bar und Temperaturen zwischen 80 und 100 °C mit der Maßgabe, daß die Polyalkyletherkette der quaternierten Aminfunktionen aus 1 bis 10 Alkylenoxid-Einheiten zusammengesetzt ist.

2. Quatäre Ammoniumphosphate nach Anspruch 1, dadurch gekennzeichnet, daß in den allgemeinen Formeln II, IIIa und IIIb $R^3$ eine gesättigte oder ungesättigte, gerad- oder verzweigtkettige, substituierte oder unsubstituierte Alkylgruppe mit 6 bis 20 C-Atomen, $R^4$ eine gerad- oder verzweigtkettige, substituierte oder unsubstituierte, gesättigte Alkylgruppe mit 8 bis 18 C-Atomen oder eine gerad- oder verzweigtkettige, substituierte oder unsubstituierte, ungesättigte Alkylgruppe mit 18 bis 22 C-Atomen und A Ethylen- und/oder Isopropylengruppen darstellt.

3. Quatäre Ammoniumphosphate nach Anspruch 1 und/oder Anspruch 2, dadurch gekennzeichnet, daß die Polyalkyletherkette aus 1 bis 5 Ethylenoxid- und/oder Propylenoxid-Einheiten zusammengesetzt ist.

4. Verfahren zur Herstellung quatärer Ammoniumphosphate, dadurch gekennzeichnet, daß aminofunktionelle Polyester mit einem Polymerisationsgrad von 2 bis 50, hergestellt in an sich bekannter Weise durch Umsetzung von Dicarbonsäuren der allgemeinen Formel I

HOOC-R-COOH

in der R einen aliphatischen, alicyclischen oder aromatischen, substituierten oder unsubstituierten Rest mit 1 bis 10 C-Atomen bedeutet, mit alkoxylierten, tertiären Aminen der allgemeinen Formel II

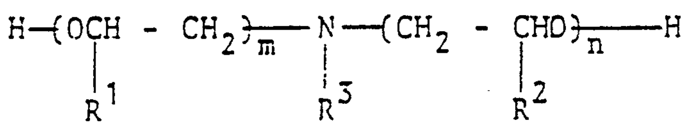

in der $R^3$ eine gesättigte oder ungesättigte, gerad- oder verzweigtkettige, substituierte oder unsubstituierte Alkylgruppe mit 1 bis 20 C-Atomen bedeutet, $R^1$ und $R^2$ gleich oder verschieden sind und H oder $CH_3$ bedeuten, m und n Zahlen zwischen 1 und 20 sind, mit der Maßgabe, daß die Summe m + n 2 bis 30 beträgt, mit Mono- und/oder Dialkylphosphorsäureestern der allgemeinen Formeln IIIa und IIIb

IIIa

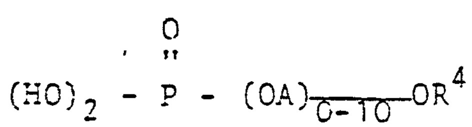

IIIb

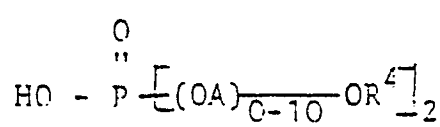

in welchen $R^4$ eine gesättigte oder ungesättigte, gerad- oder verzweigtkettige, substituierte oder unsubstituierte Alkylgruppe mit 6 bis 22 C-Atomen und A Alkylengruppen mit 2 bis 4 C-Atomen bedeutet, in Gegenwart von Wasser bei 50 bis 80 °C gemischt werden und anschließend mit Alkylenoxiden mit 2 bis 4 C-Atomen bei Drucken zwischen 1 und 5 bar und Temperaturen zwischen 80 und 100 °C umgesetzt werden, mit der Maßgabe, daß die Polyalkyletherkette der quaternierten Aminfunktionen aus 1 bis 10 Alkylenoxid-Einheiten zusammengesetzt ist.

5. Verfahren nach Anspruch 4, dadurch gekennzeichnet, daß in den allgemeinen Formeln II, IIIa und IIIb $R^3$ eine gesättigte oder ungesättigte, gerad- oder verzweigtkettige, substituierte oder unsubstituierte Alkylgruppe mit 6 bis 20 C-Atomen, $R^4$ eine gerad- oder verzweigtkettige, substituierte oder unsubstituierte,

gesättigte Alkylgruppe mit 8 bis 18 C-Atomen oder eine gerad- oder verzweigtkettige, substituierte oder unsubstituierte, ungesättigte Alkylgruppe mit 18 bis 22 C-Atomen und A Ethylen- und/oder Iospropylengruppen bedeutet.

6. Verfahren nach Anspruch 4 und/oder 5, dadurch gekennzeichnet, daß pro Aminäquivalent aminofunktioneller Polyester 1 bis 1,1 Säureäquivalente an Phosphorsäurepartialester eingesetzt werden.

7. Verfahren nach einem oder mehreren der Ansprüche 4 bis 6, dadurch gekennzeichnet, daß die Umsetzungen mit Ethylenoxid und/oder Propylenoxid durchgeführt werden mit der Maßgabe, daß die Polyalkyletherkette der quaternierten Aminfunktionen aus 1 - 5 Ethylenoxid- und/oder Propylenoxideinheiten besteht.

8. Verwendung quatärer Ammoniumphosphate, hergestellt durch

a) Umsetzung von Dicarbonsäuren der allgemeinen Formel I

HOOC-R-COOH

in der R einen aliphatischen, alicyclischen oder aromatischen, substituierten oder unsubstituierten Rest mit 1 bis 10 C-Atomen bedeutet, mit alkoxylierten, tertiären Aminen der allgemeinen Formel II

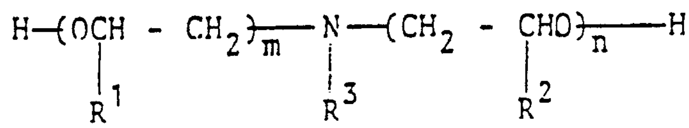

in der $R^3$ eine gesättigte oder ungesättigte, gerad-oder verzweigtkettige, substituierte oder unsubstituierte Alkylgruppe mit 1 bis 20 C-Atomen bedeutet, $R^1$ und $R^2$ gleich oder verschieden sind und H oder $CH_3$ bedeuten, m und n Zahlen zwischen 1 und 20 sind mit der Maßgabe, daß die Summe m + n 2 bis 30 beträgt und der Polymerisationsgrad der Polyester 2 bis 50 beträgt

b) Mischen der erhaltenen aminofunktionellen Polyester in Gegenwart von Wasser bei 50 bis 80 °C mit Mono-und/oder Dialkylphosphorsäureestern der allgemeinen Formeln IIIa und IIIb

IIIa

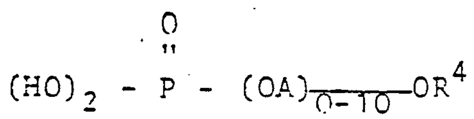

IIIb

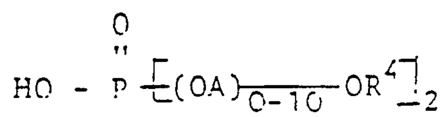

in der $R^4$ eine gesättigte oder ungesättigte, gerad-oder verzweigtkettige, substituierte oder unsubstituierte Alkylgruppe mit 6 bis 22 C-Atomen und A Alkylengruppen mit 2 - 4 C-Atomen darstellt

c) Umsetzung mit Alkylenoxiden mit 2 bis 4 C-Atomen bei Drucken von 1 bis 5 bar und Tempeaturen von 80 bis 100 °C mit der Maßgabe, daß die Polyalkyletherkette der quaternierten Aminfunktionen aus 1 bis 10 Alkylenoxid-Einheiten zusammengesetzt ist,

als Antistatika für Textilfasermaterialien.